# EUROPEAN PATENT APPLICATION

(11) **EP 3 476 801 A1**
(43) Date of publication of application: **01.05.2019**
(21) Application number: 18800029.3
(22) Date of filing: 01.08.2018
(51) Int. Cl.: C01B 25/45, H01M 4/58, H01M 4/36, H01M 4/62

(54) **METHOD FOR MANUFACTURING CATHODE ACTIVE MATERIAL POWDER OF SECONDARY BATTERY**

(30) Priority: 02.08.2017 KR 20170097971
(71) Applicant: Energy & Gongjo Co., Ltd., Buk-gu Gwangju 61090 (KR)
(72) Inventor: NOH, Hee Sook, Gwangju 62367 (KR); KANG, Sung Won, Gwangju 62321 (KR); JUN, Jung Hyun, Gwangju 61222 (KR); YANG, Dong Cheol, Gwangju 61085 (KR); PARK, Jae Dong, Gwangju 61160 (KR)
(74) Representative: Seppo Laine Oy
(86) International application number: PCT/KR2018/008753
(87) International publication number: WO 2019/027256

(57) **Abstract**

There is provided a method for producing a cathode active material for a secondary battery, the method comprising: preparing mixed solution by mixing, with balls, reactive solution containing lithium ions, transition metal ions, and poly-acid anions; forming seeds by reacting the lithium ions, the transition metal ions and the poly-acid anions with one another in the mixed solution while agitating the mixed solution; producing active material powders by spraying and drying the mixed solution having the seeds contained therein; and heat-treating the active material powders.

## Description

### CROSS-REFERENCE TO RELATED APPLICATIONS

This application claims the priority of Korean Patent Application No. 10-2017-0097971 filed on August 2, 2017, in the Korean Intellectual Property Office, the disclosure of which is hereby incorporated by reference in its entirety.

### BACKGROUND

### 1. Technical Field

The present disclosure relates to a method for producing a cathode active material for a secondary battery.

### 2. Description of the Related Art

Recently, a rapid development of a mobile IT product such as mobile phone and laptop has been actively promoting research on a small secondary battery. In addition, due to fossil energy depletion and global warming, an interest in an energy storage system for storing eco-friendly energy has been actively promoting research on a large secondary battery.

Recently, studies on LFP (LiFePO₄) having an olivine or nasicon structure as a cathode active material for the large secondary battery have been actively conducted. The LFP not only provides a high theoretical capacity (170 mAh/g) but also has advantages that a raw material is rich in resources, and price is low and an excellent stability is exhibited. The LFP, however, has disadvantages in that it has lower electrical conductivity and ion conductivity of a lithium ion than other cathode active materials, has a large capacity difference depending on a crystallinity, and has a high process cost for producing an LFP powder.

In addition, although the theoretical capacity of the LFP is high, the LFP powder synthesized via a conventional method has a problem that a capacity is much lower than the theoretical capacity due to a particle size, tap density, irregular shape, etc. of the actually produced powder.

### SUMMARY

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter.

A purpose of the present disclosure is to provide a method for producing a cathode active material powder for a secondary battery having a high tap density and a uniform particle size distribution.

In one aspect of the present disclosure, there is provided a method for producing a cathode active material for a secondary battery, the method including: preparing mixed solution by mixing, with balls, reactive solution containing lithium ions, transition metal ions, and poly-acid anions; forming seeds by reacting the lithium ions, the transition metal ions and the poly-acid anions with one another in the mixed solution while agitating the mixed solution; producing active material powders by spraying and drying the mixed solution having the seeds contained therein; and heat-treating the active material powders.

In one embodiment of the present disclosure, the reactive solution may be prepared by dissolving, in solvent, a lithium compound, a transition metal compound and a poly-acid anion-based compound. In this case the solvent may include organic solvent.

In one embodiment of the present disclosure, each of the balls may include a spherical metal oxide ball having a diameter of 0.1 to 2.0 mm. For example, the diameter of the ball may be 1.5 mm or smaller.

In one embodiment of the present disclosure, a content of the balls in the mixed solution may be 25 to 75 vol%.
In one embodiment of the present disclosure, agitating the mixed solution may include mechanically agitating the mixed solution at a heated state thereof to a temperature of 60 to 100°C. In this case, each of the formed seeds may have a size of 10 to 500 nm, and a tap density of the formed seeds has of 0.9 g/cc or larger.

In one embodiment of the present disclosure, spraying and drying the mixed solution may include spraying the mixed solution into droplets in hot-air at 150 to 200°C.

In one embodiment of the present disclosure, the method for producing the cathode active material for the secondary battery, the method may further include after forming the seeds and before forming the active material powders, removing the balls from the mixed solution.

In one embodiment of the present disclosure, heat-treating the active material powders may include heat-treating the active material powders at a temperature of 600 to 800°C for 2 to 20 hours.

In one embodiment of the present disclosure, the reactive solution may include an organic solvent, and at least a portion of a surface of the heat-treated active material powder may be coated with a carbon layer produced via a decomposition of the organic solvent.

In one embodiment of the present disclosure, the active material powder may be made of a material having a structure having a following chemical formula:

[Chemical formula 1] C-Li_{X}M_{Y}(PO₄)_{Z}

In Chemical formula 1, X has a value of 0.8 inclusive to 1.2 inclusive, Y has a value of 0 inclusive to 1 inclusive, Z has a value of 0 inclusive to 1 inclusive, and M includes at least one selected from a group consisting of Fe, Mn, Co, Ni, V and Ti.

According to the present disclosure, the active material powder with the high tap density may be produced with the uniform particle size distribution, thereby achieving improved discharge capacity.

### BRIEF DESCRIPTION OF DRAWINGS

FIG. 1 is a flow chart for explaining a method for producing a cathode active material according to an embodiment of the present disclosure.
FIGS. 2a and 2b are diagrams illustrating a nucleus generation and its growth mechanism in Present Example 1 and Comparative Example 1.
FIG. 3 is a graph showing particle sizes of seeds produced in Present Example 1 and seeds produced in Comparative Example 1.
FIGS. 4a and 4b are SEM images of an active material powder synthesized according to Present Example 1 and an active material powder synthesized according to Comparative Example 1.
FIG. 5 shows XRD results of an active material powder ('Ball') synthesized according to Present Example 1 and an active material powder ('Ball-free') synthesized according to Comparative Example 1.
FIG. 6a is a graph showing discharge capacities of batteries using active material powders synthesized according to Present Example 1 and Comparative Example 1 as cathode active materials measured under an initial charging and discharging condition (that is, C-rate) of 0.1C. FIG. 6b is a graph showing discharge capacities measured under initial charging and discharging conditions.
FIG. 7 shows discharge capacities of batteries using active material powders synthesized according to Present Example 1 ('30%'), Present Example 2 ('50%') and Present Example 3 ('70%') as cathode active materials measured under an initial charging and discharging condition (C-rate) of 0.1C.
FIG. 8 shows discharge capacities of batteries using active material powders synthesized according to Present Example 1 ('1.0 mm'), Present Example 2 ('0.5 mm') and Present Example 3 ('2.0 mm') as cathode active materials measured under an initial charging and discharging condition (C-rate) of 0.1C.

### DETAILED DESCRIPTION

Hereinafter, an embodiment of the present disclosure will now be described in detail with reference to the accompanying drawings. The present disclosure may, however, be embodied in many different forms and should not be construed as limited to the embodiments set forth herein; rather, these embodiments are provided by way of illustration only and so that this disclosure will be thorough, complete and will fully convey the full scope of the invention to those skilled in the art. The same or similar reference numerals are used throughout the drawings and the description in order to refer to the same or similar constituent elements.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

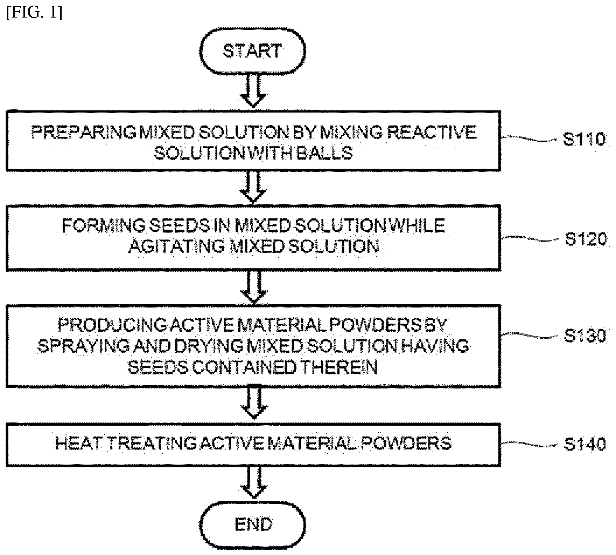

FIG. 1 is a flow chart for explaining a method for producing a cathode active material according to an embodiment of the present disclosure.

Referring to FIG. 1, the method for producing the cathode active material according to the embodiment of the present disclosure includes: a first step S110 of preparing mixed solution by mixing reactive solution and balls, a second step S120 of forming seeds in the mixed solution while agitating the mixed solution, a third step S130 of producing active material powders by spraying and drying the mixed solution having the seeds contained therein, and a fourth step S140 of heat-treating the active material powders.

In the first step S110, the reactive solution may be prepared by dissolving a starting compound in solvent.

The solvent is not particularly limited as long as it may dissolve the starting compound. In one embodiment, mixed solvent of polyol solvent and water may be used as the solvent. As the polyol solvent, organic solvent containing two or more hydroxyl groups (-OH) in a molecule may be used. For example, the polyol solvent may be one or more selected from a group consisting of ethylene glycol (EG), diethylene glycol (DEG), triethylene glycol (TEG), tetraethylene glycol (TTEG), propylene glycol (PG), butylene glycol, and the like.

The starting compound may include a plurality of compounds for synthesizing a cathode active material of a secondary battery. In one embodiment, the starting compound may include a plurality of compounds for synthesizing a cathode active material having an olivine or nasicon structure. For example, the starting compound may include a lithium compound, a transition metal compound, and a poly-acid anion-based compound. In this case, the lithium compound, the transition metal compound, and the poly-acid anion-based compound may be mixed at a molar ratio of about 1: 1 : 1 to 1.5.

The lithium compound is not particularly limited as long as it is a compound containing lithium. For example, the lithium compound may include one or more selected from a group consisting of CH₃COOLi, LiOH, LiNO₃, Li₂CO₃, Li₃PO₄, LiF, and the like.

The transition metal compound may include one or more selected from a group consisting of a Fe-based compound, a Mn-based compound, a Ni-based compound, a Co-based compound, a Ti-based compound, a V-based compound, and the like. The Fe-based compound may include one or more selected from a group consisting of Fe(CH₃COO)₂, Fe(NO₃)₂, FeC₂O₂, FeSO₄, FeCl₂, FeI₂, FeF₂, and the like, the Mn-based compound may include one or more selected from a group consisting of Mn(CH₃COO)₂, Mn(NO₃)₂, MnC₂O₂, MnSO₄, MnCl₂, MnI₂, MnF₂, and the like, and the Ni-based compound may include one or more selected from a group consisting of Ni(CH₃COO)₂, Ni(NO₃)₂, NiC₂O₂, NiSO₄, NiCl₂, NiI₂, NiF₂, and the like. In addition, the Co-based compound may include one or more selected from a group consisting of Co(CH₃COO)₂, Co(NO₃)₂, CoC₂O₂, CoSO₄, CoCl₂, CoI₂, CoF₂, and the like, the Ti-based compound may include one or more selected from a group consisting of TiH₂, TTIP(Ti(OC₃H₇)₄), and the like, and the V-based compound may include one or more selected from a group consisting of V(CH₃COO)₂, V(NO₃)₂, VC₂O₂, VSO₄, VCl₂, VI₂, VF₂, and the like.

The poly-acid anion-based compound is not particularly limited as long as it is a compound containing a poly-acid anion. For example, the poly-acid anion-based compound may be a phosphate ion-based compound or a sulfate ion-based compound. The phosphate ion-based compound may include one or more selected from a group consisting of H₃PO₄, NH₄H₂PO₄, (NH₄)₂HPO₄, (NH₄)₃PO₄, and the like, and the sulfate ion-based compound may include one or more selected from a group consisting of H₂SO₄, (NH₄)₂SO₄, FeSO₄, MnSO₄, NiSO₄, CoSO₄, VSO₄, TiSO₄, and the like.

The ball may be a spherical ball made of a material having excellent abrasion resistance and chemical resistance. In one embodiment, the ball may be a ball made of a metal oxide, such as zirconia (ZrO₂).

In one embodiment, the ball may have a diameter of about 2.0 mm or smaller. The ball collides with nuclei generated in the seeds formation step to be performed later, and controls size and shape thereof uniformly, and increases a tap density of the seeds. However, when the diameter of the ball exceeds 2.0 mm, a collision frequency of the balls and the nuclei in the nucleus generation process may be reduced due to an excessively increased ball size. Thus, the tap density increasing performance may be deteriorated. In this connection, the diameter of the ball is preferably greater than or equal to about 0.1 mm in order to deliver an effective impulse to the nuclei by the balls.

In one embodiment, the ball may be mixed in an amount of about 25 to 75 vol% of the mixed solution. When the content of the ball is less than 25 vol%, the collision frequency between the balls and the nuclei may decrease, and when the content of the ball exceeds 75 vol%, the collision frequency between the balls and the nuclei is too high, a size of the formed seed may become too small.

In the second step S120, the mixed solution may be mechanically agitated for a predetermined time in a state of being heated to a temperature of about 60 to 100°C. In this process, a lithium ion provided from the lithium compound, a transition metal ion provided from the transition metal compound, and a poly-acid anion provided from the poly-acid anion-based compound may react with each other to form the nuclei within the mixed solution, then each of the formed nuclei may grow to form seeds having a size of about 10 to 500 nm. In this process, due to the mechanical agitation, the balls collide with the growing nuclei, so that not only the seeds may have a uniform particle size distribution, but also a shape thereof may become close to spherical, and the tap density thereof may increase significantly. For example, the seeds may have a tap density of the formed seeds has of about 0.9 g/cc or larger.

In the third step, the mixed solution having the seeds contained therein is sprayed into droplets in hot air at about 150 to 200°C to evaporate the solvent of the mixed solution, thereby forming an active material powder having a size of several tens nm to several µm. In this case, a method for spray-drying the mixed solution is not particularly limited, and any known spray-drying process may be applied without limitation. For example, the mixed solution may be sprayed using a nozzle, or sprayed using a high-speed rotary disk.

In one embodiment, the mixed solution having the seeds contained therein may be spray-dried in a state of containing the balls, or may be spray-dried after removing the balls.

In the fourth step, the active material powders may be heat treated at a temperature of about 600 to 800°C for about 2 to 20 hours. For example, the heat treatment may be performed in a manner that the active material powders are heated to a temperature of about 600 to 800°C at an elevation rate of about 5 to 10°C/min in an inert gas atmosphere such as argon gas or nitrogen, then the heated powders are maintained at the heated temperature for about 1 to 20 hours, thereafter the heated powders are slowly cooled to room temperature. Via such heat treatment, the lithium ion, transition metal ion, and poly-acid anion of the raw materials may react to improve a crystallinity of the synthesized active material.

The active material powders synthesized according to the embodiment of the present disclosure may be coated with a carbon layer formed via a decomposition of an organic material such as the polyol contained in the solvent on at least a portion of the surface. For example, the active material powders synthesized by the reaction of the lithium ion, transition metal ion, and poly-acid anion may be formed of a material having a structure having a following chemical formula:

[Chemical formula 1] C-Li_{X}M_{Y}(PO₄)_{Z}

In the chemical formula 1, X may have a value of 0.8 inclusive to 1.2 or inclusive, Y may have a value of 0 inclusive to 1 inclusive, and Z may have a value of 0 inclusive to 1 inclusive. In the chemical formula 1, M may include at least one selected from a group consisting of Fe, Mn, Co, Ni, V, Ti and the like.

When the cathode active material powder is synthesized according to the present disclosure, the active material powder with the high tap density may be formed with the uniform particle size distribution.

Hereinafter, Present examples and comparative examples of the present disclosure will be described in detail. However, the following examples are only partial embodiments of the present disclosure, and the present disclosure is not to be construed as being limited to the following examples.

### [Present Example 1]

Reactive solution was prepared by adding lithium acetate (CH₃COOLi), iron nitrate (Fe(NO₃)₂) and phosphoric acid (H₃PO₄) in a molar ratio of 1:1:1.5 into mixed solvent of polyol and water, then zirconia balls having a diameter of 1.0 mm were added thereto in an amount of 30 vol% of the reactive solution, thereby mixed solution was prepared.

Subsequently, the mixed solution was agitated at 70°C for 1 hour to form seeds in the mixed solution, then the solution having the seeds contained therein was sprayed in hot air at 180 °C using a nozzle to synthesize an active material powder.

Then, the active material powders were heat-treated at 750°C for 3 hours to prepare final LiFePO₄ powders.

### [Present Example 2]

An active material powder was synthesized in the same manner as in Present Example 1 except that the content of the zirconia balls were changed to 50 vol%.

### [Present Example 3]

An active material powder was synthesized in the same manner as in Present Example 1 except that the content of the zirconia balls were changed to 70 vol%.

### [Present Example 4]

An active material powder was synthesized in the same manner as in Present Example 1 except that zirconia balls having a diameter of 0.5 mm were used.

### [Present Example 5]

An active material powder was synthesized in the same manner as in Present Example 1 except that zirconia balls having a diameter of 2.0 mm were used.

### [Present Example 6]

An active material powder was synthesized in the same manner as in Present Example 1 except that the mixed solution was agitated at 40°C for 1 hour to form seeds in the mixed solution.

### [Present Example 7]

An active material powder was synthesized in the same manner as in Present Example 1 except that the mixed solution was agitated at 80°C for 1 hour to form seeds in the mixed solution.

### [Present Example 8]

An active material powder was synthesized in the same manner as in Present Example 1 except that the mixed solution was agitated at 90°C for 1 hour to form seeds in the mixed solution.

### [Present Example 9]

An active material powder was synthesized in the same manner as in Present Example 1 except that the mixed solution was agitated at 95°C for 1 hour to form seeds in the mixed solution.

### [Comparative Example 1]

A reactive solution was prepared by adding the lithium acetate (CH₃COOLi), iron nitrate (Fe(NO₃)₂) and phosphoric acid (H₃PO₄) in a molar ratio of 1:1:1.5 to the mixed solvent of polyol and water. Unlike Present Example 1, the zirconia balls were not added into the reactive solution.

Subsequently, the reactive solution was agitated at 80°C for 1 hour to form seeds in the reactive solution, and then the solution having the seeds contained therein was sprayed in the hot air at 180°C using the nozzle to synthesize an active material powder.

Then, the active material powders were heat-treated at 750°C for 3 hours to prepare a final LiFePO₄ powders.

### [Experimental Example 1]

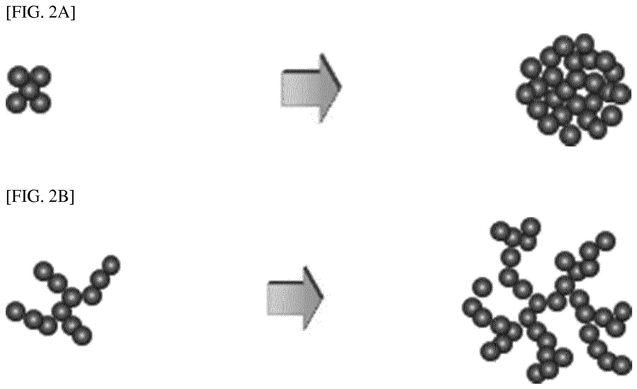

FIG. 2a and 2b are diagrams illustrating a nucleus generation and its growth mechanism in Present Example 1 and Comparative Example 1.

Referring to FIGS. 2a and 2b, in Present Example 1, due to a collision between the zirconia balls and generated and growing nuclei, the seed is formed to have a high tap density while having a shape close to spherical, whereas in Comparative Example 1, the seed is expected to be formed to have an irregular shape and a low tap density.

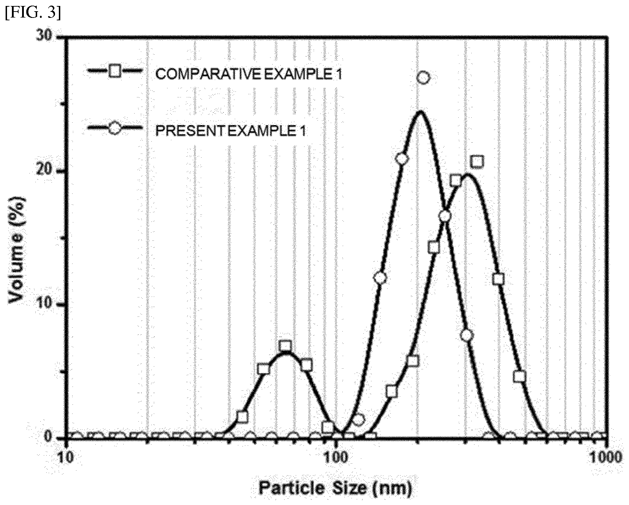

FIG. 3 is a graph showing particle sizes of the seeds produced in Present Example 1 and the seeds produced in Comparative Example 1.

Referring to FIG. 3, it may be confirmed that the seed formed in Present Example 1 has a substantially narrow particle size distribution of about 100 to 400 nm, whereas the seed formed in Comparative Example 1 has a broad particle size distribution of about 30 to 600 nm. That is, when the active material powder is produced according to the present, because the active material powder is produced using the seeds of the uniform particle sizes, also the particle size distribution of the active material powder is expected to have a very narrow range.

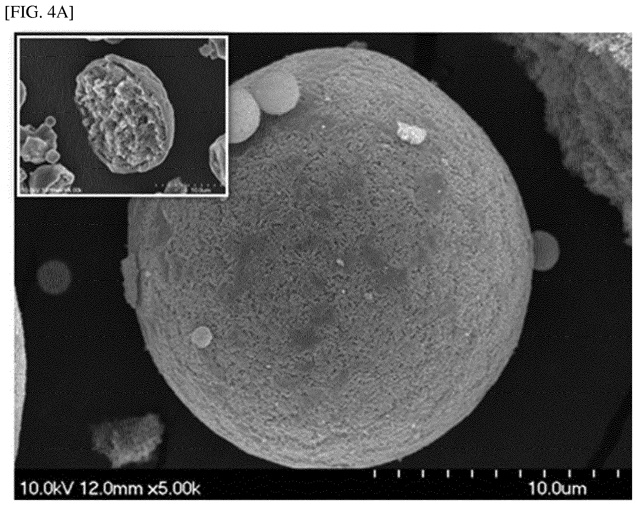

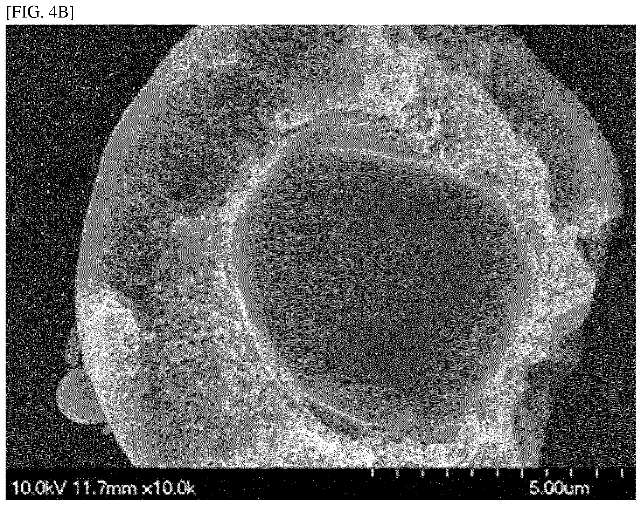

FIGS. 4a and 4b are SEM images of the active material powder synthesized according to Present Example 1 and the active material powder synthesized according to Comparative Example 1.

Referring to FIGS. 4a and 4b, it may be confirmed that in the active material powder synthesized according to Present Example 1, the active material powder was defined with a high tap density without forming a hollow therein, but in the active material powder synthesized according to Comparative Example 1, the active material powder was defined with a low tap density with forming a hollow therein. Specifically, the active material powder synthesized according to Present Example 1 was measured to have a tap density of the formed seeds has of 0.90 g/cc, and the active material powder synthesized according to Comparative Example 1 was measured to have a tap density of the formed seeds has of 0.54 g/cc.

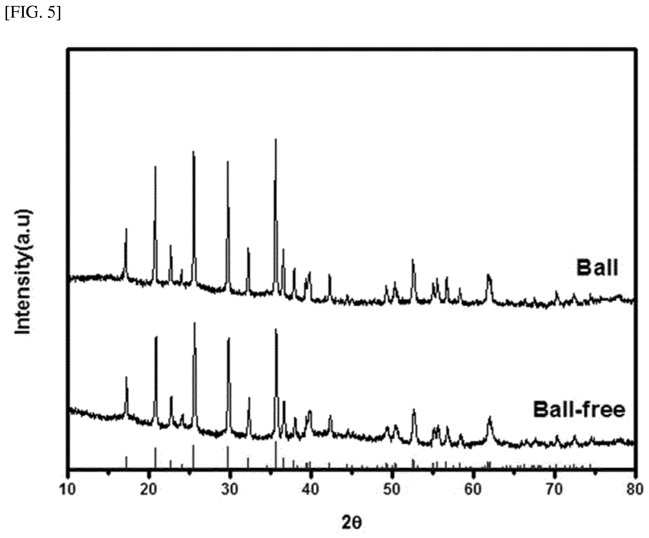

FIG. 5 shows XRD results of the active material powder ('Ball') synthesized according to Present Example 1 and the active material powder ('Ball-free') synthesized according to Comparative Example 1.

Referring to FIG. 5, the active material powder synthesized according to Present Example 1 and the active material powder synthesized according to Comparative Example 1 both have crystalline properties. However, since the active material powder synthesized according to Present Example 1 has larger peak intensities than the active material powder synthesized according to Comparative Example 1, it was found that the crystallinity of the active material powder synthesized according to Present Example 1 was better.

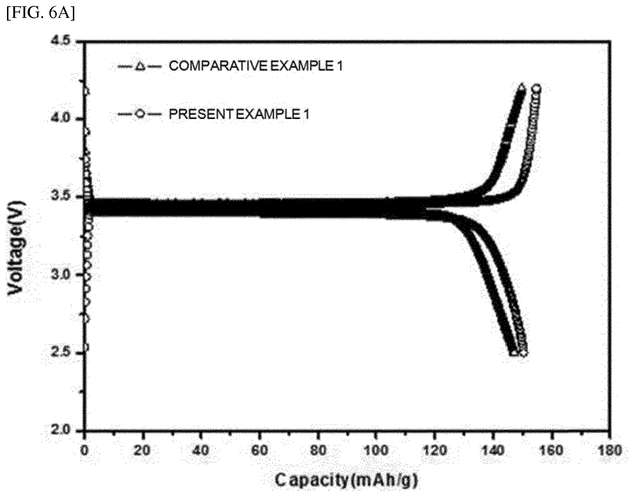

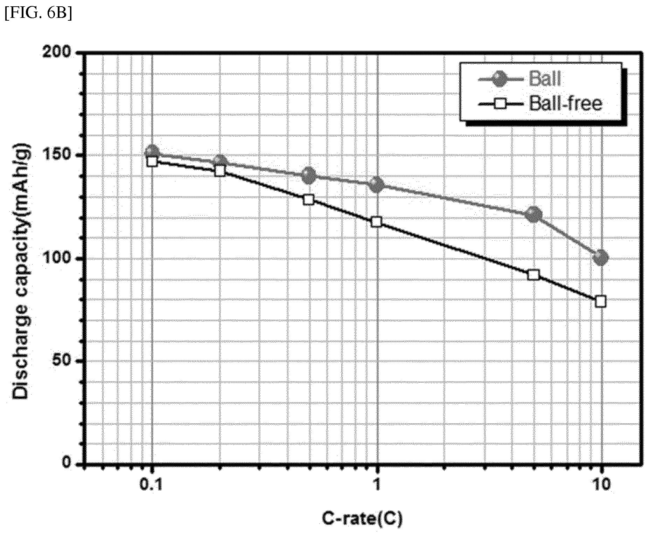

FIG. 6a is a graph showing discharge capacities of batteries using active material powders synthesized according to Present Example 1 and Comparative Example 1 as cathode active materials measured under initial charging and discharging conditions (C-rate) of 0.1C. FIG. 6b is a graph showing discharge capacities measured under initial charging and discharging conditions. Table 1 below shows the result of FIG. 6b.

**[Table 1]**

| Example | Discharge capacity (mAh/g) | | | | | |
|---|---|---|---|---|---|---|
| | 0.1C | 0.2C | 0.5C | 1C | 5C | 10C |
| Comparative Example 1 | 147.1 | 142.5 | 128.5 | 117.4 | 92.0 | 78.9 |
| Present Example 1 | 150.8 | 146.6 | 140.1 | 135.8 | 121.1 | 100.3 |

Referring to FIGS. 6a, 6b and Table 1, it may be confirmed that compared with the active material powder synthesized according to Comparative Example 1, discharge capacities are improved when the active material powder synthesized according to Present Example 1 is used as the cathode active material. In particular, it may be confirmed that the larger the initial charging and discharging conditions, the better the discharge capacity characteristics of the active material powder synthesized according to Example 1.

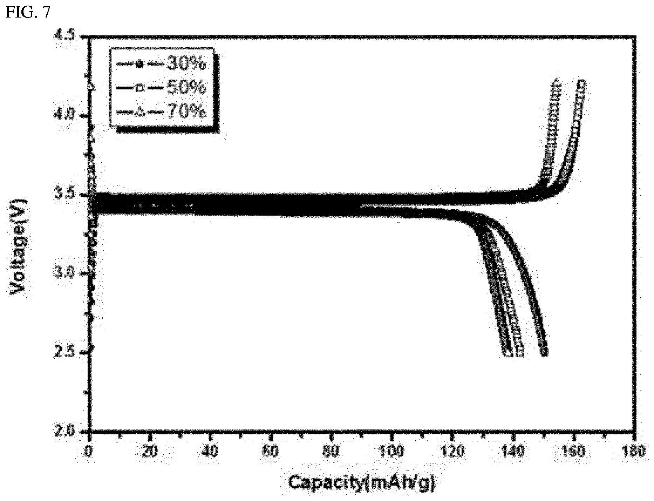

FIG. 7 shows discharge capacities of batteries using active material powders synthesized according to Present Example 1 ('30%'), Present Example 2 ('50%') and Present Example 3 ('70%') as cathode active materials measured under initial charging and discharging conditions (c-rate) of 0.1C. Table 2 below shows measured tap densities and discharge capacities of the batteries of the active material powders synthesized according to Present Example 1 ('30%'), Present Example 2 ('50%') and Present Example 3 ('70%').

**[Table 2]**

| Example | Tap density(g/cc) | Discharge capacity(mAh/g) |
|---|---|---|
| Present Example 1 | 0.90 | 150.4 |
| Present Example 2 | 0.92 | 142.4 |
| Present Example 3 | 0.95 | 138.4 |

Referring to FIG. 7 and Table 2, as the content of the ball increases, the discharge capacity decreases somewhat, but the tap density of the active material powders increases. Considering both the tap density and the discharge capacity, it is preferable that the content of the ball is about 25 to 35 vol%.

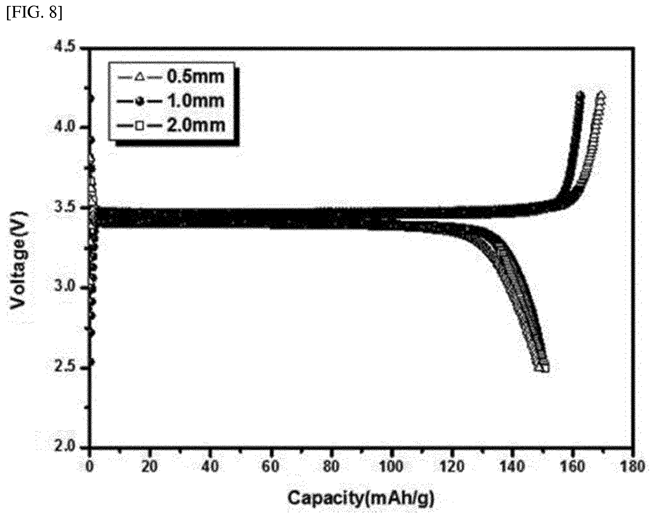

FIG. 8 shows discharge capacities of batteries using active material powders synthesized according to Present Example 1 ('1.0 mm'), Present Example 2 ('0.5 mm') and Present Example 3 ('2.0 mm') as cathode active materials measured under initial charging and discharging conditions of 0.1C. Table 3 below shows measured tap densities and discharge capacities of the batteries of the active material powders synthesized according to Present Example 1 ('1.0 mm'), Present Example 4 ('0.5 mm') and Present Example 5 ('2.0mm').

**[Table 3]**

| Example | Tap density(g/cc) | Discharge capacity(mAh/g) |
|---|---|---|
| Present Example 4 (0.5 mm) | 0.88 | 149.0 |
| Present Example 1 (1.0 mm) | 0.90 | 150.4 |
| Present Example 5 (2.0 mm) | 0.72 | 150.8 |

Referring to FIG. 8 and Table 3, the tap density of the active material powder synthesized according to Present Example 5 with a ball size of 2.0 mm was the lowest, and the tap densities of the active material powders synthesized according to Present Example 1 and Present Example 4 were similar to each other. From this, it is preferable that the size of the ball is 2.0 mm or smaller, preferably 1.5 mm or less. On the other hand, in terms of the discharge capacity, the size of the ball was found to have little effect.

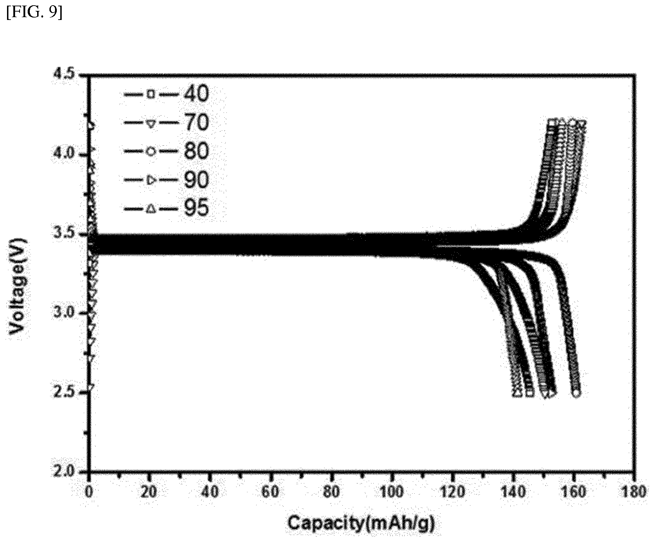

FIG. 9 shows discharge capacities of batteries using active material powders synthesized according to Present Example 1 ('70'), Present Example 6 ('40'), Present Example 7 ('80'), Present Example 8 ('90'), and Present Example 9 ('95') as cathode active materials measured under initial charging and discharging conditions of 0.1C. Table 4 below shows measured tap densities and discharge capacities of the batteries of the active material powders synthesized according to Present Example 1 ('70'), Present Example 6 ('40'), Present Example 7 ('80'), Present Example 8 ('90'), and Present Example 9 ('95').

**[Table 4]**

| Example | Tap density(g/cc) | Discharge capacity(mAh/g) |
|---|---|---|
| Present Example 6 ('40') | 0.61 | 149.0 |
| Present Example 1 ('70') | 0.90 | 150.4 |
| Present Example 7 ('80') | 1.05 | 160.7 |
| Present Example 8 ('90') | 1.19 | 152.4 |
| Present Example 9 ('95') | 1.31 | 141.4 |

Referring to FIG. 9 and Table 4, it is confirmed that an agitation temperature for forming the seeds in the mixed solution has an effect on the tap density of the active material powder. In detail, in case that the agitation temperature is about 70 °C or more, the active material powder has a the tap density which is higher than those in case that the agitation temperature is below 70 °C. Particularly, a battery including the active material powder synthesized in case that the agitation temperature is about 70 °C to about 90 °C, more particularly about 75 °C to about 85 °C has a highest discharge capacity.

Although the technical idea of the present disclosure has been described concretely in accordance with the preferable embodiments of the present disclosure, those skilled in the art of the present disclosure will understand that various embodiments are possible within the scope of the technical idea of the present disclosure.

## Claims

1. A method for producing a cathode active material for a secondary battery, the method comprising:
preparing mixed solution by mixing, with balls, reactive solution containing lithium ions, transition metal ions, and poly-acid anions;
forming seeds by reacting the lithium ions, the transition metal ions and the poly-acid anions with one another in the mixed solution while agitating the mixed solution;
producing active material powders by spraying and drying the mixed solution having the seeds contained therein; and
heat-treating the active material powders.

2. The method for claim 1, wherein the reactive solution is prepared by dissolving, in solvent, a lithium compound, a transition metal compound and a poly-acid anion-based compound,
wherein the solvent includes organic solvent.

3. The method for claim 1, wherein each of the balls includes a spherical metal oxide ball having a diameter of 0.1 to 2.0 mm.

4. The method for claim 3, wherein the diameter of the ball is 1.5 mm or smaller.

5. The method for claim 3, wherein a content of the balls in the mixed solution is 25 to 75 vol%.

6. The method for claim 1, wherein agitating the mixed solution includes mechanically agitating the mixed solution at a heated state thereof to a temperature of 60 to 100°C.

7. The method for claim 6, wherein agitating the mixed solution includes mechanically agitating the mixed solution at a heated state thereof to a temperature of 75 to 85°C.

8. The method for claim 6, wherein each of the formed seeds has a size of 10 to 500 nm, and a tap density of the formed seeds has of 0.9 g/cc or larger.

9. The method for claim 1, wherein spraying and drying the mixed solution includes spraying the mixed solution into droplets in hot-air at 150 to 200°C.

10. The method for claim 1, wherein the method further includes, after forming the seed and before forming the active material powders, removing the balls from the mixed solution.

11. The method for claim 1, wherein heat-treating the active material powders includes heat-treating the active material powders at a temperature of 600 to 800°C for 2 to 20 hours.

12. The method for claim 11, wherein the reactive solution includes an organic solvent,
wherein at least a portion of a surface of the heat-treated active material powder is coated with a carbon layer produced via a decomposition of the organic solvent.

13. The method for claim 12, wherein the active material powder is made of a material having a structure having a following chemical formula:
[Chemical formula 1] C-Li_{X}M_{Y}(PO₄)_{Z}
wherein X has a value of 0.8 inclusive to 1.2 inclusive, Y has a value of 0 inclusive to 1 inclusive, Z has a value of 0 inclusive to 1 inclusive, and M includes at least one selected from a group consisting of Fe, Mn, Co, Ni, V and Ti.
